# EUROPEAN PATENT SPECIFICATION

(11) **EP 3 704 404 B1**
(45) Date of publication and mention of the grant of the patent: **23.02.2022**
(21) Application number: 18795641.2
(22) Date of filing: 31.10.2018
(51) Int. Cl.: F16K 37/00, F16K 31/04, F16K 5/06, G01D 5/241

(54) **MOTORIZED BALL VALVE WITH STAND-ALONE ACTUATOR**
MOTORISCH ANGETRIEBENES KUGELVENTIL MIT EIGENSTÄNDIGEM AKTUATOR
SOUPAPE À BILLE MOTORISÉE AVEC ACTIONNEUR AUTONOME

(30) Priority: 01.11.2017 EP 17199501
(43) Date of publication of application: 09.09.2020
(73) Proprietor: Kamstrup A/S, 8660 Skanderborg (DK)
(72) Inventor: RØMER, Daniel Beck, 8660 Skanderborg (DK); LAURSEN, Peter Schmidt, 8660 Skanderborg (DK)
(74) Representative: Plougmann Vingtoft a/s
(86) International application number: PCT/EP2018/079852
(87) International publication number: WO 2019/086529

(56) References cited:
- WO-A1-2016/150644
- JP-A- S5 569 375
- JP-A- 2009 287 672
- US-A1- 2007 289 635
- US-A1- 2013 015 381
- US-A1- 2015 034 848

## Description

### FIELD OF THE INVENTION

The present invention relates to a motorized ball valve with a stand-alone ball valve actuator for being releasably mounted on the ball valve, wherein the ball valve actuator comprises an electrical motor and a self-contained power sourced for rotating the ball valve between an open and a closed position.

### BACKGROUND OF THE INVENTION

Utility companies supply utilities, such as water and gas, to consumers via a pipe network. Usually, meters are installed in such networks to monitor use and bill user according to their usage of the supplied utility. Controlling the supply of the utility to specific consumers may become relevant if usage is not accounted for or if the utility becomes scares, such as in periods of draught or if other supply problems arise.

Traditionally, manually operated valves located at the consumer premises would have to be operated by the utility to control supply. Closing and reopening the water supply in connection with unpaid bills would thus require substantial manual labor by the utility, which is ineffective, costly and potentially also dangerous.

Remote controllable electrically actuated valves, such as ball valves, are known, e.g. from WO2016/150644A1, and may be installed to control the supply of a utility. However, these suffer from various drawbacks such as the need for an external power supply, short product life or lack of waterproof character. Further, it may be advantageously to be able to change or retrofit an electric actuator on a vale after the valve has been installed. For example, simple valves may already exist or be installed at a large number of consumption sites. On the other hand, electric actuators may only be installed at a limited number of prioritized consumption sites, to reduce costs.

Further, in many jurisdictions it is a requirement that consumers always have access to a limited amount of the supplied utility, such as a daily limited amount of water. To be able to reduce the supply to a certain minimum requires that the flow through a valve can be controlled. This may be achieved by reducing the time the valve is open or by reducing the flow rate through the valve.

A need thus exists for an improved motorized ball valve and a stand-alone ball valve actuator, in particular a valve actuator that can be mounted or retrofitted on various ball valve constructions.

### OBJECT OF THE INVENTION

An object of the present invention is to provide a ball valve with a stand-alone ball valve actuator adapted for being mounted or retrofitted on various ball valve constructions, thereby enabling ball valves to be remote controlled.

### SUMMARY OF THE INVENTION

Thus, the above described object and several other objects are intended to be obtained in a first aspect of the invention by providing a ball valve with a stand-alone ball valve actuator comprising a hermetically sealable actuator housing including an valve interface configured for releasably coupling the stand-alone ball valve actuator to a ball valve; an electric motor arranged in the actuator housing, configured to selectively rotate a ball element of the ball valve via a gearing and coupling member; an encoder assembly for producing a position signal representative of the rotational position of the coupling member; a transceiver system arranged in the actuator housing, for wirelessly receiving configuration information regarding a desired rotational position of the coupling member; a processor arranged in the actuator housing, configured to process said position signal and said configuration information, and control the electric motor to rotate the ball element, accordingly, and a self-contained power source arranged in the actuator housing, for driving the processor, the transceiver system and the electric motor.

By providing the actuator components including a self-contained power source, such as a battery, in an actuator housing and providing the actuator with a valve interface, a stand-alone ball valve actuator adapted for being mounted or retrofitted on various ball valve constructions is achieved. Furthermore, the encoder assembly may include a rotation element at least partly of a conductive material, a sensing disc comprising a plurality of conductive regions covered by a dielectric material and an electronic circuit for measuring a capacitance created between the rotation element and each of the conductive regions. Herein the conductive regions may be provided as copper traces on a printed circuit board (PCB) and the dielectric material may be a solder mask provided on top of the copper traces. Also, the PCB may be a multi-layer PCB and a layer of the PCB next to the layer comprising the conductive regions may be cleared from conductive material. Additionally, a further layer of the multi-layered PCB may be provided with a conductive material in the area above the conductive regions to provide a shield for the capacitance created between the sensing disc and the rotation element.

Moreover, the rotation element may comprise a conductive sensor plate extending perpendicularly from a central shaft, and the sensor plate may be arranged opposite and in parallel with conductive regions provided on the PCB. Herein, the central shaft may be rotationally fixed to the coupling member and extends through an aperture provided in the PCB. More specifically, the central shaft may be arranged in a bore of the coupling member and a spring element may be provided to force the sensor plate against the PCB. Furthermore, the sensor plate may be comprised by two oppositely arranged, electrically connected circle wedges. Also, the rotation element may be a monolithic structure made from an electrical conductive material or an injection moldable electrical conductive polymer composition.

According to the invention, the valve interface includes a releasable stem connection for connecting the coupling member to a stem of the ball valve assembly. Moreover, the stem connection may include an indentation provided in the coupling member and the indentation may be adapted for receiving a mating part of the stem of the ball valve assembly. Also, according to the invention, the stem connection is arranged inside the actuator housing in a position retracted from a bottom face of the actuator housing constituting part of the valve interface. Furthermore, the valve interface may include a locking mechanism for releasably coupling the actuator housing to the ball valve.

Additionally, the stand-alone ball valve actuator may include a display arranged in or below a transparent lid covering an open end of the actuator housing. Also, the stand-alone ball valve actuator may comprise an input device, such as a push button, adapted to provide an input to the processor to control the electric motor to temporarily rotate the ball element to an open or partly open position. Additionally or alternatively, the input device may be configured to control opening of the ball valve based on received configuration information allowing a user to confirm that opening of the ball valve is desired.

Furthermore, the gearing of the stand-alone ball valve actuator may be configured to provide a gear ratio gear ration between 1:8000 and 1:12000.

Moreover, the transceiver system of the stand-alone ball valve actuator may be configured for transmitting status information regarding the rotational position of the coupling member indicative of the state of the associated ball valve.

The motorized ball valve according to the invention comprises a ball valve assembly including a valve housing having an inlet for receiving fluid, an outlet for discharging fluid, a flow channel connecting the inlet and outlet, and a controllable ball element moveable to selectively vary the cross-sectional area of flow of at least a portion of the flow channel; and a stand-alone ball valve actuator as described above, mounted on the ball valve assembly.

### BRIEF DESCRIPTION OF THE FIGURES

The motorized ball valve with a stand-alone ball valve actuator according to the invention will now be described in more detail with regard to the accompanying figures. The figures show one way of implementing the present invention and is not to be construed as being limiting to other possible embodiments falling within the scope of the attached claim set.
Figure 1 shows a motorized ball valve including a ball valve assembly and a stand-alone ball valve actuator,
Figure 2 shows a cross section of the motorized ball valve in a longitudinal direction,
Figure 3 shows a cross section of the motorized ball valve in a transversal direction,
Figures 4a-4c shows printed circuit boards and internal electronics for the stand-alone ball valve actuator,
Figure 5 shows an equivalence diagram for the capacitor construction of the encoder assembly.
Figure 6 shows a stand-alone ball valve actuator,
Figure 7 shows a mounting interface of the ball valve actuator, and
Figure 8 shows a ball valve assembly.

### DETAILED DESCRIPTION OF AN EMBODIMENT

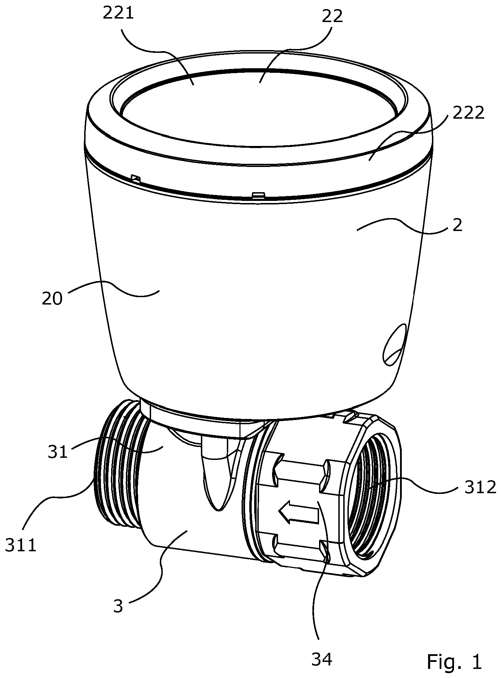

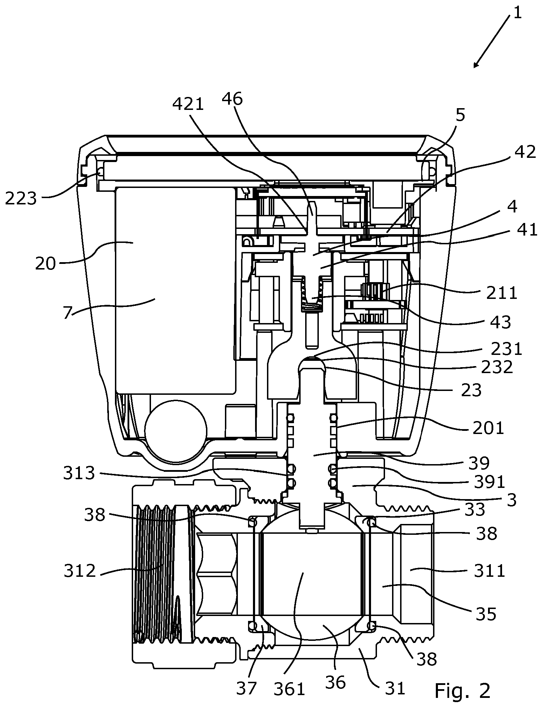

Referring to Fig. 1, the motorized ball valve 1 includes a ball valve assembly 3 and a stand-alone ball valve actuator 2. The ball valve assembly comprises a valve housing 31 having an inlet 312 for receiving fluid and an outlet 311 for discharging fluid. The in- and outlet of the valve housing are provided with threaded connections for connecting the motorized ball valve to connecting pipes. In the shown embodiment, the valve housing is further provided with a connecting nut 34 mounted on one of the threaded connections. The connecting nut is provided with an inner right-handed thread in one end and an inner left-handed thread in as opposite end. During installation of the motorized ball valve, the connecting thread may be rotated and simultaneously screwed onto the thread of the valve housing and a thread provided on a connecting pipe (not shown). As better seen from Fig. 2, the valve housing further comprises a flow channel 35 connecting the inlet and outlet. A controllable ball element 36 is arranged in the flow channel for controlling a flow through the valve. The valve ball is provided with a main aperture 361 and may be rotated inside the valve housing to vary a cross-sectional area of the flow channel. In an alternative embodiment, the valve ball may be provided with a second auxiliary aperture (not shown), smaller than the main aperture. The auxiliary aperture may be used to limit the cross-sectional area of the flow channel in a controlled manner, without having to precisely control the position of the valve ball. Inside the valve housing, the ball valve is supported by ball seats 37 and an O-ring or other packing elements 38 on opposite sides. The O-ring is provided to control the compression force between the ball seat and the valve ball. By including an O-ring, tolerance requirements on valve housing parts may be reduced, while achieving the required compression force. Including O-rings also provides resilience into the construction, which may prevent or reduce problems related to stuck valve balls caused by wear, corrosion and/or sedimentation. A valve stem 39 extends from the valve ball through a bore 313 provided in the valve housing. Around the valve stem a number of gaskets 391 are arranged providing a sealing between the stem and the bore.

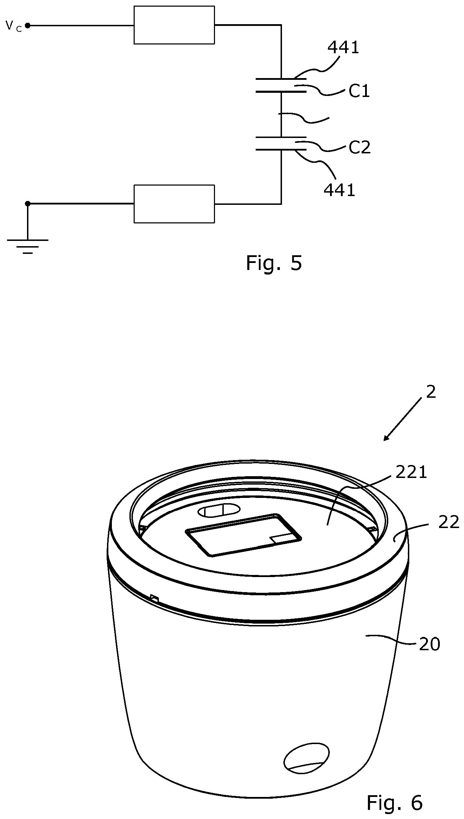

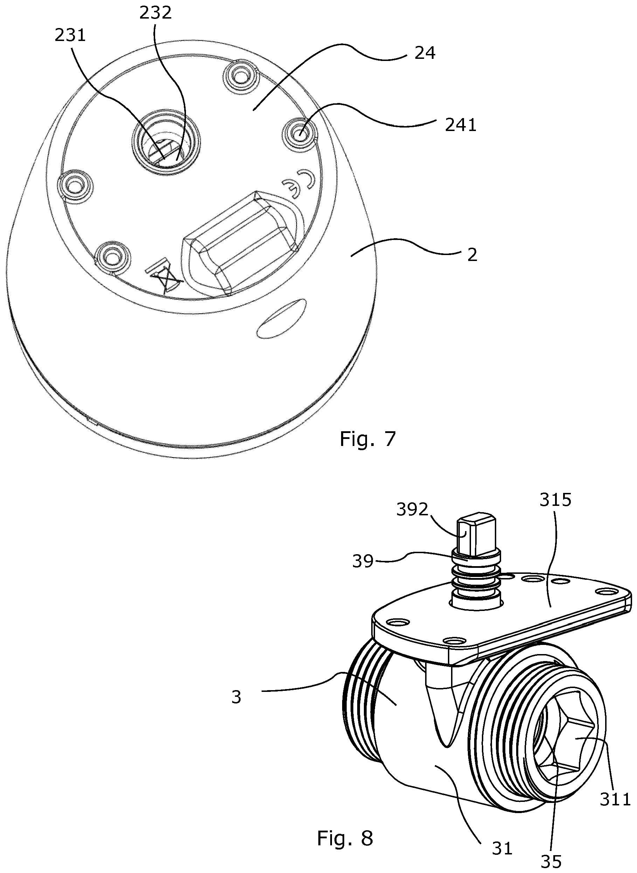

Referring again to Fig. 6, the stand-alone ball valve actuator (2) comprises an actuator housing 20 in the form of a polymer cup provided with a lid 22 including a transparent window element 221 fixated by a locking ring 222. A sealing element 223 is arranged between the housing and the lit, creating a hermetically sealed compartment for internal valve actuator component as seen from Fig. 2. A bottom face of the housing 20 shown in Fig. 7, provides a valve interface 24 for releasably mounting the stand-alone ball valve actuator on an interface of the ball valve assembly. In the shown embodiment, the valve interface includes four threaded holds 241 for receiving a corresponding number of screws extending through holes provided in a connecting flange 315 of the ball valve housing. In other embodiments, the valve interface may include other locking or fixations means, such as a locking mechanism, for releasably connecting the valve interface to the connecting flange. The valve interface may also be designed to engage with a variety of different valve interfaces. Hereby the stand-alone ball valve actuator may be used as a standard actuator for different types and brands of ball valves.

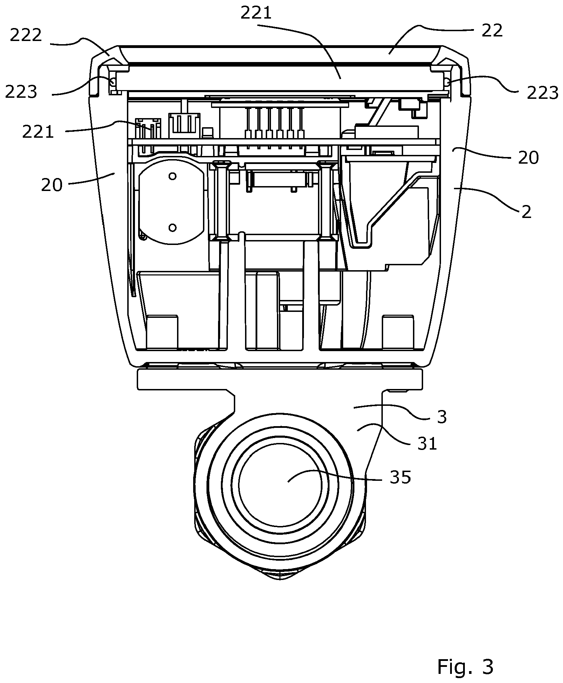

Referring to Fig. 2 and 3, internal valve actuator components include an electric motor 21 for rotating the ball element 36 via a gearing 211 including multiple stages of reduction and coupling member 23, an encoder assembly 4 for producing a position signal representative of the rotational position of the coupling member, a transceiver system 5 system, a processor 6, and a battery 7 or other self-contained power source. The battery may for example be a D-cell battery, C-cell battery or one or two A-cell batteries.

The coupling member 23 connects to the valve stem 39 and translates rotation of the electric motor via the gearing to the ball element 36. The connecting member includes a stem connection 231 provided with a recess 232 for receiving a mating part 392 of the valve stem 39 and various geometries may be used for the recess and the mating stem part. In other embodiments, the stem and coupling member may be connected using other mechanical principles such as a connecting sleeve of a thread connection. In the shown embodiment, the stem extends into the housing 20 through a bottom housing bore 201. To ensure a hermetically sealed enclosure inside the housing, sealing members, such as O-ring are provided around the stem along the section arranged in the bottom housing bore. As seen from Fig. 2, the housing of the valve actuator is separated from the ball valve assembly by a gap and the enclosure of the housing is thereby not in fluid communication with the flow channel or other potentially fluid bearing parts of the valve assembly. An upper end of the coupling member, opposite the recess adapted for receiving the stem, is provided with a bore 233 for receiving a rotation member 41 of the encoder assembly.

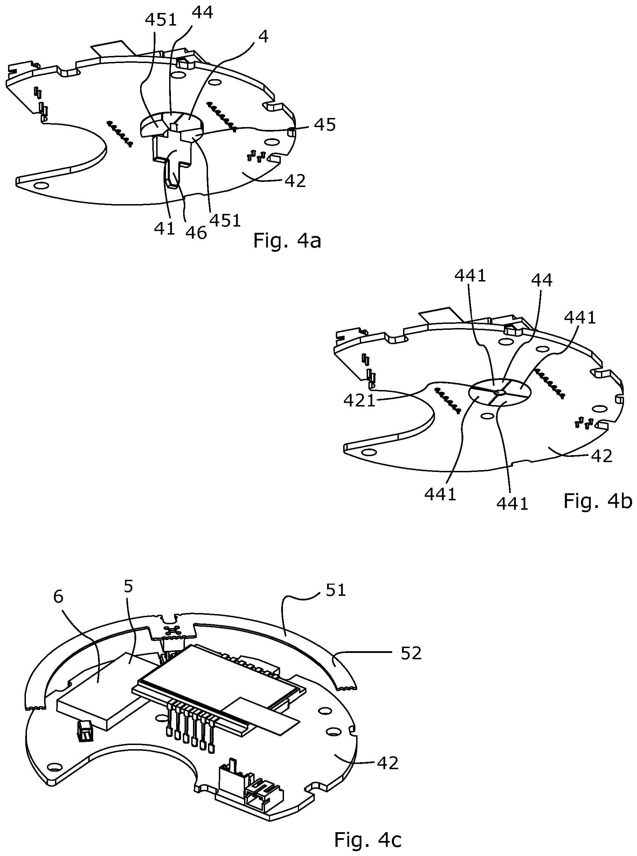

Referring to Fig. 1 and 4, the encoder assembly includes the rotation member 41 and a sensing disc 44 comprised by a number of separate conductive regions 441 provided on a downwards facing side of a printed circuit board 42 (PCB), arranged inside the housing 20. The PCB is covered by an isolating/dielectric coating and together with the rotation member made at least partly from conductive material, a capacitor construction is realized, as will be further described below. In the shown embodiment, the sensing disc is comprised by four regions each constituting a 90 degree circle wedge. However, in other embodiments fewer or more regions could be applied to reduce or increase resolution of the encoder.

The PCB includes four (4) layers (not shown) and the conductive regions consists of copper regions or copper traces 441 provided on a bottom layer the PCB (layer four) in the above described geometry. The layer of the PCB containing the copper regions 441 is made from FR4 having a thickness from 0,20-0,25 mm. The copper traces have a thickness of 30-40 µm and are covered with a solder mask providing the dielectric isolation layer. Layer three of the PCB (the layer next to the bottom layer) have been cleared from conductive material in the area of the conductive regions to avoid negatively influencing the capacitance measurements by the integrated circuit. The capacitance created between the conductive regions and the rotating member is thus isolated on the PCB by providing a distance of 1,0-1,5 mm to the nearest conductive material. Additionally, the second intermediate layer of the PCB (Layer two) is provided with a conductor, i.e. a layer of copper, in the area of the conductive regions to provide a shield from components provided on the top layer of the PCB (Layer one).

In other embodiments, the copper traces could be applied to another exterior layer of a PCB, such as the top layer. In a multi-layered PCB, the conductive regions could also be implemented on one of the intermediate layers and the PCB substrate (FR4) could be used as the dielectric material of the capacitor.

The rotation member comprises a sensor plate 45 adapted for being arranged opposite and in parallel with the PCB and the conductive regions. In the embodiment shown in Fig. 4a, the sensor plate is comprised by two oppositely arranged 90 degree circle wedges. I other embodiments the sensor plate may be constituted by a single 90 degree circle wedge, by wider or narrower wedges or a sensor plate shape as a half-circle. The two circle wedges extend from a central shaft 46 coaxial with an axis of rotation of the rotation member. The central shaft 46 extend above the sensor plate through an aperture 421 in the PCB and below the sensor plate into the bore 233 of the coupling member. Additionally, a spring element 43 is provided in the bore to force the sensor plate towards the bottom face of the PCB. Hereby the rotation member is kept in place and good mechanical contact between the sensor plate and the dielectric material of the PCB is achieved.

The rotational member is made of an electrical conductive material, such as an injection molded polymer composition, and the two oppositely arranged circle wedges are electrically connected through the central shaft. In the shown embodiment, the rotation member is a monolithic element, such as an injection molded element. In other embodiments, the sensor plate may include a plate element shaped as a full circle or other geometry covered by a layer of conductive material constituting the circle wedges of half-circle.

By arranging the sensor plate of the rotation member opposite the conductive regions, separated by the dielectric PCB coating, a capacitor construction is realized, as stated above. Each of the conductive regions are connected to an integrated circuit of the processor 6 and by applying a potential to one copper region and grounding the other three an electrical circuit may be created. An equivalence diagram of such circuit is shown in Fig. 5, illustrating a first capacitor C1 constituted by one of the circle wedge 451 of the sensor plate 45 and one of the conductive regions 441 of the sensing disc and a second capacitor C2 constituted by another circle wedge 451 and another conductive region 441. As the rotation member rotates above the conductive regions, variable capacitance are created between the separate circle wedges of the sensor plate and the separate conductive regions. As the capacitance of a capacitor depends on the areas of the overlapping sensor plates, the capacitance of each of the variable capacitors reaches a maximum when a circle wedge is positioned directly above a copper region. As the rotating disc always overlaps at least two conductive regions a circuit including two serial coupled capacitors is created. A first capacitor is created between the first copper region coupled to a potential and the sensor plate and a second capacitor is created between the sensor plate and one or more of the other conductive regions.

The integrated circuit connected to the conductive regions is capable of giving a measure of the capacitance of each copper region in a given instance of time. By tracking and processing this measure of capacitance for each copper region, it is possible to determine the equivalent absolute position of the rotation member, as the capacitance of the regions changes in a well-defined manner. Integrated circuits configured for measuring capacitance is well known to the skilled person, and may for example be found in processors from Silicon Labs^{™} sold under the trademark EFM^{®}32 Gecko.

As the rotation member is rotationally fixed to the coupling member, which again is coupled to the valve ball, it is possible to determine the rotational position of the valve ball from the position of the rotation member. Based on the rotational position of the valve ball, the state of the valve can be determined.

The Electric motor 21 and a gearing 211 are configured for enabling valve operation based on a battery based power supply. The use of a battery power supply poses certain restriction on available voltage and current and power consumption should in general be reduced to extend the operation life of the product. In particular, peak currents may reduce the battery lifetime and should therefore be reduced or avoided. One way of protecting batteries against high peak currents is by including a hybrid layer capacitor (HLC) in the battery pack. HLC's are manufactured and sold by Tadiran Batteries^{™}.

In one embodiment the electrical motor is a standard DC motor having an output of 0.3-0.4 W and delivering an output torque 0,5 (mN · m) to 1,0 (mN · m), more specifically 0,6 (mN · m) to 0,8 (mN · m). The motor is configured to be driven by a 3.6 voltage supplied by the battery and consumes 50-100 mA during normal operation. Converting this low an output from the electric motor to sufficient driving torque at the valve stem requires a substantial gearing. In the present embodiment, the gearing includes multiple stages of reduction providing a gear ratio of 1:10000, in other embodiments, the gear ratio may be lower or higher, such as between 1:8000 and 1:12000. Providing a sufficient gear ratio is crucial in achieving the torque required to drive a ball valve using a battery supplied electric motor. Without sufficient gearing the electric motor would have to be able to deliver a much higher output torque and a smaller size battery, such as a D-cell, C-cell or one or two A-cell(s) would not be able to deliver the voltage required by such electric motor, during normal operation.

The processor 6 and transceiver system 5 are configured to enable remote control of the ball valve actuator. The transceiver system is configured to wirelessly receive configuration information over a radio frequency communication link from a remotely located transmitter. The transceiver system includes a transmitter, receiver and an antenna device 51 connected to a connector mounted on the PCB. The antenna device includes a rigid antenna substrate 52, such as FR4, provided with a conductive antenna element. The antenna substrate is self-supporting and shaped to extend along an inner face of the housing in parallel with the PCB. The antenna device constitutes a dipolar antenna, and the antenna substrate and conductive element has an angular extension of up to 180 degrees.

Configuration information received by the transceiver system 5 is transferred to the processor 6 that interprets the information and controls the electric motor accordingly. The processor is also configured to compute the position of the ball valve based on input from the encoder assembly, as described above. Based on the configuration information and the present state of the ball valve, the processor is adapted to control the electric motor to rotate the ball valve. If the ball valve is in an open position wherein the aperture in the valve ball is fully aligned with the flow passage, and configuration information instructing closure of the ball valve is received, the electric motor is activated to rotate the valve ball to a closed position. Rotation between the open position and the closed position can be realized by rotating the valve ball 90 degrees in a first direction. Subsequent opening of the ball valve can be achieved by rotating the valve ball 90 degrees in a second direction opposite the first direction. An obvious alternative to would be to rotate the valve ball in the same direction going from the open position to the closed position and from closed position to open position. However, rotating the valve ball back and forth between the open position and the closed position is advantageous in terms of determining the exact position of the valve ball. If the valve ball is continuously rotated tolerances in the encoder assembly and signal processing may result in an offset developing over time between the actual and the estimated position of the valve ball.

Furthermore, the ball valve actuator may be provided with an input device (not shown), such as a push button arranged below the transparent window element. Such a push button may for example be based on capacitive sensing to detect input from a human finger. Such input device being configured to provide an input to the processor to control the electric motor. In one scenario the input device may be configured control the electrical motor to temporarily rotate the ball element to an open or partly open position. By allowing, a user to temporarily open the ball valve a limited amount of water may be supplied to the user as required in some jurisdictions. Certain restriction may apply to the possibility of temporarily opening of the valve. Opening may for example only be possible once a day, one a week or for the specified time period. In another scenario the input device is configured to control opening of the ball valve based on received configuration information. If configuration information is transmitted to the valve actuator instructing opening off the ball valve, the user can use the input device to confirm that opening of the ball valve is desired. If for example the piping network downstream of the closed ball valve is unfit for receiving flowing water, e.g. due to a leak or ongoing repair, the input device may be used to prevent such opening of the ball valve. The input device thereby provides a precautionary measure preventing undesired operation of the valve actuator and opening of the ball valve.

The processor 6, transceiver system 5 and electric motor 21 are powered by a battery 7 arranged inside the hermetically sealed compartment of the housing. By including an integrated power source, the ball valve actuator does not require any external wiring and the availability of a mains electricity of other electricity infrastructure. The ball valve actuator is thus completely self-contained and can be mounted on and operated in connection with ball valves installed in remote locations.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, in accordance with the wording of the claims, and the mentioning of these features in different claims does not exclude that a combination of features is not possible and advantageous.

## Claims

1. A motorized ball valve (1) comprising:
a ball valve assembly (3) including a valve housing (31) having an inlet (311) for receiving fluid, an outlet (312) for discharging fluid, a flow channel (35) connecting the inlet and outlet, and a controllable ball element (36) moveable to selectively vary the cross-sectional area of flow of at least a portion of the flow channel; and
a stand-alone ball valve actuator (2) mounted on the ball valve assembly (3) and comprising:
a hermetically sealable actuator housing (20) including a valve interface (24) configured for releasably coupling the stand-alone ball valve actuator (2) to the ball valve assembly (3);
an electric motor (21) arranged in the actuator housing (20), configured to selectively rotate the ball element (36) of the ball valve assembly (3) via a gearing (211) and a coupling member (23);
an encoder assembly (4) for producing a position signal representative of the rotational position of the coupling member (23);
a transceiver system (5) arranged in the actuator housing for wirelessly receiving configuration information regarding a desired rotational position of the coupling member (23);
a processor (6) arranged in the actuator housing (20) configured to process said position signal and said configuration information, and control the electric motor (21) to rotate the ball element (36), accordingly, and
a self-contained power source (7) arranged in the actuator housing for driving the processor, the transceiver system and the electric motor, **characterized in that**
the valve interface (24) includes a releasable stem connection (231) for connecting the coupling member (23) to a stem (39) of the ball valve assembly (3);
wherein the stem connection (231) is arranged inside the actuator housing (2) in a position retracted from a bottom face of the actuator housing (20) constituting part of the valve interface (24).

2. A motorized ball valve according to claim 1, wherein the encoder assembly (4) includes a rotation element (41) at least partly of a conductive material, a sensing disc (44) comprising a plurality of conductive regions (441) covered by a dielectric material and an electronic circuit for measuring a capacitance created between the rotation element and each of the conductive regions (441).

3. A motorized ball valve according to claim 2, wherein the conductive regions are provided as copper traces (441) on a printed circuit board (PCB) (42) and the dielectric material is a solder mask provided on top of the copper traces.

4. A motorized ball valve according to claims 2 or 3, wherein the rotation element comprises a conductive sensor plate (45) extending perpendicularly from a central shaft (46), the sensor plate being arranged opposite and in parallel with conductive regions provided on the PCB.

5. A motorized ball valve according to claim 4, wherein the central shaft (46) is rotationally fixed to the coupling member and extends through an aperture (421) provided in the PCB.

6. A motorized ball valve according to claim 5, wherein the central shaft is arranged in a bore 233 of the coupling member (23) and a spring element (43) is provided to force the sensor plate against PCB.

7. A motorized ball valve according to any of the claims 4-6, wherein the sensor plate is comprised by two oppositely arranged, electrically connected circle wedges (451).

8. A motorized ball valve according to any of the claims 2-6, wherein the rotation element is a monolithic structure made from an electrical conductive material or an injection moldable electrical conductive polymer composition.

9. A motorized ball valve according to any of the preceding claims, wherein the stem connection includes an indentation (231) provided in the coupling member, the indentation being adapted for receiving a mating part of the stem of the ball valve assembly.

10. A motorized ball valve according to any of the preceding claims, wherein the valve interface (24) includes a locking mechanism for releasably coupling the actuator housing (2) to the ball valve assembly (3).

11. A motorized ball valve according to any of the preceding claims, wherein the gearing is configured for providing a gear ratio between 1:8000 and 1:12000.

12. A motorized ball valve according to any of the preceding claims, wherein the transceiver system (5) is further configured for transmitting status information regarding the rotational position of the coupling member (23) indicative of the state of the associated ball valve.

13. A motorized ball valve according to any of the preceding claims, wherein sealing members (391), such as O-rings, are provided around the stem (39) along the section arranged in a bottom housing bore (201).

14. A motorized ball valve according to any of the preceding claims, wherein the valve interface (24) includes locking or fixation means, such as a locking mechanism, for releasably connecting the valve interface (24) to a connecting flange (315).

## Patentansprüche

1. Motorisch angetriebenes Kugelventil (1), umfassend:
eine Kugelventilanordnung (3), beinhaltend ein Ventilgehäuse (31) mit einem Einlass (311) zum Aufnehmen von Fluid, einem Auslass (312) zum Abgeben von Fluid, einem Durchflusskanal (35), der den Einlass und den Auslass verbindet, und einem steuerbaren Kugelelement (36), das beweglich ist, um die Querschnittsfläche des Durchflusses für zumindest einen Abschnitt des Durchflusskanals selektiv zu variieren; und
einen eigenständigen Kugelventilaktuator (2), der an der Kugelventilanordnung (3) befestigt ist und Folgendes umfasst:
ein hermetisch abdichtbares Aktuatorgehäuse (20), beinhaltend eine Ventilschnittstelle (24), die dazu konfiguriert ist, den eigenständigen Kugelventilaktuator (2) lösbar mit der Kugelventilanordnung (3) zu koppeln;
einen Elektromotor (21), der in dem Aktuatorgehäuse (20) angeordnet ist, dazu konfiguriert, das Kugelelement (36) der Kugelventilanordnung (3) über ein Getriebe (211) und ein Kopplungselement (23) selektiv zu drehen;
eine Drehgeberanordnung (4) zum Erzeugen eines Positionssignals, das die Drehposition des Kopplungselements (23) darstellt;
ein Sendeempfängersystem (5), das in dem Aktuatorgehäuse zum drahtlosen Empfangen von Konfigurationsinformationen in Bezug auf eine gewünschte Drehposition des Kopplungselements (23) angeordnet ist;
einen Prozessor (6), der in dem Aktuatorgehäuse (20) angeordnet ist und dazu konfiguriert ist, das Positionssignal und die Konfigurationsinformationen zu verarbeiten und den Elektromotor (21) entsprechend zu steuern, um das Kugelelement (36) zu drehen, und
eine unabhängige Energiequelle (7), die in dem Aktuatorgehäuse angeordnet ist, zum Betreiben des Prozessors, des Sendeempfängersystems und des Elektromotors, **dadurch gekennzeichnet, dass**
die Ventilschnittstelle (24) eine lösbare Schaftverbindung (231) zum Verbinden des Kopplungselements (23) mit einem Schaft (39) der Kugelventilanordnung (3) beinhaltet;
wobei die Schaftverbindung (231) innerhalb des Aktuatorgehäuses (2) in einer Position angeordnet ist, die von einer Unterseite des Aktuatorgehäuses (20), die einen Teil der Ventilschnittstelle (24) darstellt, zurückgezogen ist.

2. Motorisch angetriebenes Kugelventil nach Anspruch 1, wobei die Drehgeberanordnung (4) ein Drehelement (41), das zumindest teilweise aus einem leitfähigen Material besteht, eine Abtastscheibe (44) umfassend eine Vielzahl von leitfähigen Regionen (441), die durch ein dielektrisches Material abgedeckt sind, und eine elektronische Schaltung zum Messen einer Kapazität, die zwischen dem Drehelement und jeder der leitfähigen Regionen (441) erzeugt wird, beinhaltet.

3. Motorisch angetriebenes Kugelventil nach Anspruch 2, wobei die leitfähigen Regionen als Kupferleiterbahnen (441) auf einer Leiterplatte (printed circuit board - PCB) (42) bereitgestellt sind und das dielektrische Material ein Lötstopplack, der auf der Oberseite der Kupferleiterbahnen aufgebracht ist, ist.

4. Motorisch angetriebenes Kugelventil nach Anspruch 2 oder 3, wobei das Drehelement eine leitfähige Sensorplatte (45) umfasst, die senkrecht von einer mittigen Welle (46) verläuft, wobei die Sensorplatte gegenüber und parallel zu leitfähigen Regionen, die auf der PCB bereitgestellt sind, angeordnet ist.

5. Motorisch angetriebenes Kugelventil nach Anspruch 4, wobei die mittige Welle (46) drehbar an dem Kopplungselement befestigt ist und durch eine Öffnung (421), die in der PCB bereitgestellt ist, verläuft.

6. Motorisch angetriebenes Kugelventil nach Anspruch 5, wobei die mittige Welle in einer Bohrung 233 des Kopplungselements (23) angeordnet ist und ein Federelement (43) bereitgestellt ist, um die Sensorplatte gegen die PCB zu drücken.

7. Motorisch angetriebenes Kugelventil nach einem der Ansprüche 4-6, wobei die Sensorplatte aus zwei gegenüberliegend angeordneten, elektrisch verbundenen kreisförmigen Keilen (451) besteht.

8. Motorisch angetriebenes Kugelventil nach einem der Ansprüche 2-6, wobei das Drehelement eine monolithische Struktur, die aus einem elektrisch leitfähigen Material hergestellt ist, oder eine spritzgießbare, elektrisch leitfähige Polymerzusammensetzung ist.

9. Motorisch angetriebenes Kugelventil nach einem der vorhergehenden Ansprüche, wobei die Schaftverbindung eine Vertiefung (231) beinhaltet, die an dem Kopplungselement bereitgestellt ist, wobei die Vertiefung zum Aufnehmen eines passenden Teils des Schafts der Kugelventilanordnung angepasst ist.

10. Motorisch angetriebenes Kugelventil nach einem der vorhergehenden Ansprüche, wobei die Ventilschnittstelle (24) einen Verriegelungsmechanismus zum lösbaren Koppeln des Aktuatorgehäuses (2) mit der Kugelventilanordnung (3) beinhaltet.

11. Motorisch angetriebenes Kugelventil nach einem der vorhergehenden Ansprüche, wobei das Getriebe zum Bereitstellen eines Übersetzungsverhältnisses zwischen 1:8000 und 1:12000 konfiguriert ist.

12. Motorisch angetriebenes Kugelventil nach einem der vorhergehenden Ansprüche, wobei das Sendeempfängersystem (5) ferner zum Übertragen von Statusinformationen in Bezug auf die Drehposition des Kopplungselements (23), die den Zustand des assoziierten Kugelventils angeben, konfiguriert ist.

13. Motorisch angetriebenes Kugelventil nach einem der vorhergehenden Ansprüche, wobei Abdichtungselemente (391), wie etwa O-Ringe, um den Schaft (39) entlang des Abschnitts, der in einer unteren Gehäusebohrung (201) angeordnet ist, bereitgestellt sind.

14. Motorisch angetriebenes Kugelventil nach einem der vorhergehenden Ansprüche, wobei die Ventilschnittstelle (24) Verriegelungs- oder Befestigungsmittel, wie etwa einen Verriegelungsmechanismus, zum lösbaren Verbinden der Ventilschnittstelle (24) mit einem Verbindungsflansch (315) beinhaltet.

## Revendications

1. Soupape à bille motorisée (1) comprenant :
un ensemble soupape à bille (3) comprenant un boîtier de soupape (31) comportant une entrée (311) destinée à recevoir du fluide, une sortie (312) destinée à décharger le fluide, un canal d'écoulement (35) reliant l'entrée et la sortie, et un élément à bille (36) pouvant être commandé mobile pour faire varier sélectivement l'aire de section transversale d'écoulement d'au moins une partie du canal d'écoulement ; et
un actionneur de soupape à bille autonome (2) monté sur l'ensemble soupape à bille (3) et comprenant :
un boîtier d'actionneur (20) pouvant être hermétiquement scellé comprenant une interface de soupape (24) conçue pour coupler de manière libérable l'actionneur de soupape à bille autonome (2) à l'ensemble soupape à bille (3) ;
un moteur électrique (21) agencé dans le boîtier d'actionneur (20), conçu pour faire tourner sélectivement l'élément bille (36) de l'ensemble soupape à bille (3) par l'intermédiaire d'un engrenage (211) et d'un élément d'accouplement (23) ;
un ensemble codeur (4) destiné à produire un signal de position représentatif de la position de rotation de l'élément d'accouplement (23) ;
un système émetteur-récepteur (5) agencé dans le boîtier d'actionneur destiné à recevoir sans fil des informations de configuration concernant une position de rotation souhaitée de l'élément d'accouplement (23) ;
un processeur (6) agencé dans le boîtier d'actionneur (20) conçu pour traiter ledit signal de position et lesdites informations de configuration, et commander le moteur électrique (21) pour faire tourner l'élément bille (36), en conséquence, et
une source de puissance indépendante (7) agencée dans le boîtier d'actionneur destinée à entraîner le processeur, le système émetteur-récepteur et le moteur électrique, **caractérisée en ce que**
l'interface de soupape (24) comprend un raccord de tige amovible (231) destiné à raccorder l'élément d'accouplement (23) à une tige (39) de l'ensemble soupape à bille (3) ;
ledit raccord de tige (231) étant agencé à l'intérieur du boîtier d'actionneur (2) dans une position rétractée d'une face inférieure du boîtier d'actionneur (20) constituant une partie de l'interface de soupape (24).

2. Soupape à bille motorisée selon la revendication 1, ledit ensemble codeur (4) comprenant un élément de rotation (41) constitué au moins en partie d'un matériau conducteur, un disque de détection (44) comprenant une pluralité de zones conductrices (441) recouvertes d'un matériau diélectrique et un circuit électronique destiné à mesurer une capacité créée entre l'élément de rotation et chacune des zones conductrices (441).

3. Soupape à bille motorisée selon la revendication 2, lesdites zones conductrices étant disposées sous forme de traces de cuivre (441) sur une carte de circuit imprimé (PCB) (42) et ledit matériau diélectrique étant un masque de soudure disposé au-dessus des traces de cuivre.

4. Soupape à bille motorisée selon les revendications 2 ou 3, ledit élément de rotation comprenant une plaque de capteur conductrice (45) s'étendant perpendiculairement à partir d'un arbre central (46), la plaque de capteur étant agencée en face des zones conductrices disposées sur la PCB et parallèlement à celles-ci.

5. Soupape à bille motorisée selon la revendication 4, ledit arbre central (46) étant fixé en rotation à l'élément d'accouplement et s'étendant à travers une ouverture (421) ménagée dans la PCB.

6. Soupape à bille motorisée selon la revendication 5, ledit arbre central étant agencé dans un alésage 233 de l'élément d'accouplement (23) et un élément ressort (43) étant prévu pour forcer la plaque de détection contre la PCB.

7. Soupape à bille motorisée selon l'une quelconque des revendications 4 à 6, ladite plaque de détection comprenant deux coins circulaires (451) raccordés électriquement agencés de manière opposée.

8. Soupape à bille motorisée selon l'une quelconque des revendications 2 à 6, ledit élément de rotation étant une structure monolithique constituée d'un matériau électriquement conducteur ou d'une composition polymère électriquement conductrice pouvant être moulée par injection.

9. Soupape à bille motorisée selon l'une quelconque des revendications précédentes, ledit raccord de tige comprenant une indentation (231) disposée dans l'élément d'accouplement, l'indentation étant adaptée pour recevoir une partie d'accouplement de la tige de l'ensemble soupape à bille.

10. Soupape à bille motorisée selon l'une quelconque des revendications précédentes, ladite interface de soupape (24) comprenant un mécanisme de verrouillage destiné à coupler de manière libérable le boîtier d'actionneur (2) à l'ensemble soupape à bille (3).

11. Soupape à bille motorisée selon l'une quelconque des revendications précédentes, ledit engrenage étant conçu pour fournir un rapport de démultiplication compris entre 1:8000 et 1:12000.

12. Soupape à bille motorisée selon l'une quelconque des revendications précédentes, ledit système émetteur-récepteur (5) étant en outre conçu pour transmettre des informations d'état concernant la position de rotation de l'élément d'accouplement (23) indiquant l'état de la soupape à bille associée.

13. Soupape à bille motorisée selon l'une quelconque des revendications précédentes, des éléments d'étanchéité (391), tels que des joints toriques, étant disposés autour de la tige (39) le long de la section agencée dans un alésage de boîtier inférieur (201).

14. Soupape à bille motorisée selon l'une quelconque des revendications précédentes, ladite interface de soupape (24) comprenant un moyen de verrouillage ou de fixation, tel qu'un mécanisme de verrouillage, destiné à raccorder de manière amovible l'interface de soupape (24) à une bride de raccordement (315).
